Europäisches Patentamt

European Patent Office

Office européen des brevets

(19)

(11) Veröffentlichungsnummer: **0 302 376**
**A2**

(12) **EUROPÄISCHE PATENTANMELDUNG**

(21) Anmeldenummer: 88112113.1

(22) Anmeldetag: 27.07.88

(51) Int. Cl.⁴: **G06K 13/04**

(30) Priorität: 07.08.87 CH 3045/87

(43) Veröffentlichungstag der Anmeldung:
**08.02.89 Patentblatt 89/06**

(84) Benannte Vertragsstaaten:
**CH DE FR GB IT LI NL SE**

(71) Anmelder: **RUTISHAUSER DATA AG**
**Kronenstrasse 9**
**CH-8712 Stäfa(CH)**

(72) Erfinder: **Rutishauser, Thomas**
**Rütihofstrasse 40**
**CH-8713 Uerikon(CH)**

(74) Vertreter: **Patentanwälte Schaad, Balass &**
**Partner**
**Dufourstrasse 101 Postfach**
**CH-8034 Zürich(CH)**

(54) **Sortiergerät und -verfahren für von einer Büromaschine gelieferte, blattförmige Aufzeichnungsträger.**

(57) Zwei gemeinsam um eine Lenkachse (6) verschwenkbare Paare von Walzen (9, 10; 12, 13) gehören einem Förderkanal (7) an, wobei für die Verschwenkung ein Schrittmotor (25) und den Antrieb der Walzen ein Elektromotor (28) vorgesehen ist. Dem bezüglich des Förderkanals (7) austrittsseitigen Walzenpaar (12, 13) ist eine Lenkanordnung zugeordnet, die entsprechend der Schwenklage die Richtung des Walzenspaltes auf der Austrittseite gegenüber jener auf der Eintrittseite verändert und dabei angenähert zum Verlauf von der Austrittseite zugeordneten Abgabestellen in Form von Ablagefächern (A) ausrichtet. Im Betrieb des Sortiergerätes kann der Förderkanal (7) ein von einem Drucker (D) zugeführtes Blatt in einer einem Eintrittsspalt (3) entsprechenden Uebernahmestellung nach Ingangsetzung des Eletromotors durch die Walzen (9, 10) übernehmen, während der weiteren Förderung des Blattes eine gewählte Abgaberichtung anfahren und dabei die Ausrichtung des Austrittes auf das entsprechende Ablagefach vornehmen. Nach Abgabe des Blattes kehrt der Förderkanal wieder in die Uebernahmestellung zurück. Das Sortiergerät lässt sich auf eine von mehreren Uebernahmestellungen, z.B. auch eine aus einem vorgeschalteten Sortiergerät einrichten, wie auch eine Abgabestelle anfahren, die der Uebergabe eines Blattes an ein weiteres Sortiergerät dient.

Fig. 2

## Sortiergerät und -verfahren für von einer Büromaschine gelieferte, blattförmige Aufzeichnungsträger

Die Erfindung betrifft ein Sortiergerät für von einer Büromaschine gelieferte, blattförmige Aufzeichnungsträger nach dem Oberbegriff von Anspruch 1.

Ein bekanntes Sortiergerät dieser Art weist ein Walzenpaar auf, das auf einer geraden Bahn verfahrbar ist. Die Bahn verläuft entlang einer Reihe von Ablagefächern, welche die Abgabestellen bilden und erstreckt sich quer zu dem durch das Walzenpaar definierten Förderspalt bzw. dessen Förderrichtung. Diese Förderrichtung ist parallel zu jener Richtung ausgelegt, in welcher die Büromaschine die Aufzeichnungsträger ausstösst. Die Bahn gestattet dem Walzenpaar eine Uebernahmestelle zu bedienen und dabei eine Lage einzunehmen, in welcher der Förderspalt mit der Ausstossrichtung der Büromaschine fluchtet. Sobald in dieser Lage des Walzenpaares ein Aufzeichnungsträger in den Förderspalt eingelaufen bzw. von dessen rotierenden Walzen erfasst worden ist, wird deren Drehung unterbrochen. Das Walzenpaar wird darauf auf der Bahn verfahren und in eine Lage gebracht, die auf ein vorbestimmtes Ablagefach ausgerichtet ist. Durch die in dieser Lage wieder einsetzende Drehung der Walzen wird der Aufzeichnungsträger in das Ablagefach gefördert.

Der Einsatz des bekannten Sortiergerätes ist auf Fälle beschränkt, bei welchen die Büromaschine die Aufzeichnungsträger etwa horizontal ausstösst und die Ausladung bzw. der Raumbedarf der Ablagefächer in dieser Richtung tragbar ist. Diese Bedingungen beeinträchtigen insbesondere die Verwendung des bekannten Sortiergerätes als Zusatzeinrichtung zur nachträglichen Ausrüstung von Büromaschinen.

Aufgabe der Erfindung ist die Schaffung eines kostengünstigen Sortiergerätes, welches bei zuverlässiger Uebernahme und Abgabe der Aufzeichnungsträger sowohl inbezug auf die Anordnung relativ zur Büromaschine und die Lage der Uebernahmestelle wie auch inbezug auf die Lage der Abgabestellen Wahlmöglichkeiten ergibt.

Die Lösung dieser Aufgabe gelingt mit den Massnahmen nach dem Kennzeichen von Anspruch 1.

Die schwenkbare Lagerung des Förderspaltes gestattet die Lage der Uebernahmestelle bezüglich der Schwenkachse wie auch jene der Abgabestellen am Umfang der Leitachse in weiten Bereichen frei zu wählen. So kann die Uebernahmestelle insbesondere nicht nur horizontal auf die Schwenkachse ausgerichtet sein, sondern oberhalb oder unterhalb derselben liegen. Andererseits können auch Abgabestellen oberhalb oder unterhalb der Schwenkachse liegen. Damit ist es beispielsweise möglich, die blattförmigen Aufzeichnungsträger von der Büromaschine durch ein erstes Sortiergerät übernehmen zu lassen und ein Teil derselben einem oder mehreren weiteren erfindungsgemässen Sortiergeräten zu übergeben, die z.B. durch Vermittlung des ersten Sortiergerätes gesteuert sind. Mithin lässt sich die Anzahl der bedienbaren Abgabestellen bzw. der zur Verfügung stehenden Ablagemöglichkeiten, z.B. Ablagefächern, gegebenenfalls auch nachträglich vergrössern.

Vorteilhafterweise bildet der Förderspalt zumindest einen Teil eines Förderkanales, wobei im Falle von als endlose Bänder ausgestalteten umlaufenden Organen diese den Förderkanal in seiner Länge gegebenenfalls vollständig begrenzen können.

Mit der Ausbildung des Förderspaltes als Förderkanal ergibt sich gegenüber dem bekannten Sortiergerät auf jeden Fall der Vorteil, dass die Förderung des in den Förderkanal eingezogenen blattförmigen Aufzeichnungsträgers, z.B. eines Papierblattes, während der Ausrichtbewegung desselben auf die Abgabestelle nicht unterbrochen werden muss. Die maximal benötigte Zeitdauer für das Ausrichten des Förderkanales lässt sich durch entsprechende Auslegung der Winkelgeschwindigkeit des Förderkanales so wählen, dass dieser eine gewählte Abgabestelle erreicht hat, bevor das Papierblatt am Ende des Förderkanals angekommen ist. Mithin lassen sich die Steuermittel für die Bewegung des Aufzeichnungsträgers im Förderkanal vereinfachen, da die Notwendigkeit, den Förderantrieb zu unterbrechen und wieder in Gang zu setzen, entfällt. Darüberhinaus ergibt sich hieraus allenfalls auch eine höhere Sortiergeschwindigkeit bzw. -leistung, da Zeitverluste aus der Verzögerung und Beschleunigung der Antriebs- und Förderorgane während des Sortiervorganges entfallen.

Um die blattförmigen Aufzeichnungsträger nicht nur auf eine Abgabestelle auszurichten, sondern deren Austrittsöffnung der Erstreckungsrichtung von Ablagefächern anzugleichen, kann es vorteilhaft sein, den Verlauf des Förderkanals verstellbar auszugestalten und die Verstellung desselben in Abhängigkeit von einer gewünschten Austrittsrichtung vorzunehmen. Zu diesem Zweck ist an der Austrittsseite des Förderkanales vorzugsweise ein Walzenpaar vorgesehen, dessen Förderspalt inbezug auf die Richtung des Förderspaltes der umlaufenden Organe verschwenkbar ist. Vorteilhafterweise ist hierzu die eine der beiden Walzen des austrittsseitigen Walzenpaares um die andere der beiden Walzen verschwenkbar und steht unter dem Einfluss einer Lenkanordnung, welche die Walze in Abhängigkeit von der Richtung des Förderspaltes der umlaufenden Organe einstellt.

Es ist sinngemäss auch möglich, das Walzenpaar an der Eintrittsseite des Förderkanales verschwenkbar zu diesem anzuordnen. Diese Massnahme ermöglicht, dass das eintrittsseitige Walzenpaar einen weiteren blattförmigen Aufzeichnungsträger erfassen bzw. übernehmen zu lassen, noch bevor der Förderkanal als Ganzes in die der Uebernahme entsprechende Ausgangsstellung zurückgekehrt ist. Offensichtlich lässt sich hierdurch die Sortierleistung des Gerätes weiter steigern.

Das erfindungsgemässe Sortiergerät kann als Zusatzgerät zu einer Büromaschine sowohl als eine selbständige Einheit mit einem eigenen Gehäuse ausgebildet wie auch in die Büromaschine integriert sein.

Nachfolgend ist eine beispielsweise Ausführungsform des erfindungsgemässen Sortiergerätes sowie des erfindungsgemässen Sortierverfahrens im Zusammenhang mit einer Büromaschine anhand der Zeichnung näher erläutert. Es zeigen:

Fig. 1 in Seitenansicht zwei auf einem Drucker angeordnete Sortiergeräte,

Fig. 2 einen schematischen Querschnitt durch das untere der beiden Sortiergeräte nach Fig. 1, und

Fig. 3 einen Vertikalschnitt durch das Sortiergerät entlang Linie III-III in Fig. 2, wobei Teile des Gehäuses der Uebersichtlichkeit halber weggelassen sind.

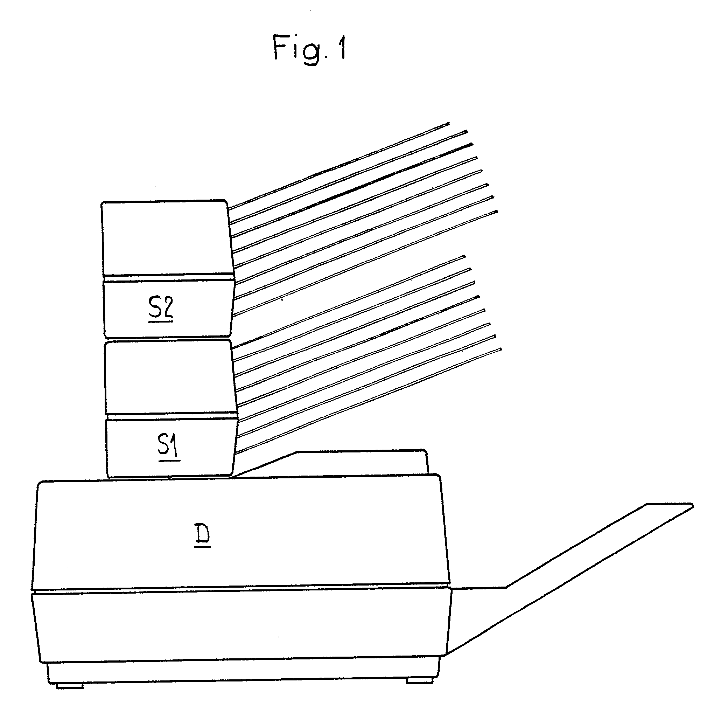

In der in Fig. 1 dargestellten Anordnung sind auf einen Drucker D zwei erfindungsgemässe, unter sich gleiche Sortiergeräte S1 und S2 aufgesetzt, wobei das Sortiergerät S2 auf dem Sortiergerät S1 sitzt. Jedes der Sortiergeräte weist acht mit A bezeichnete Ablagefächer auf. Der Drucker D fördert bedruckte Blätter durch einen nicht dargestellten Austrittsspalt vertikal nach oben und mithin in Richtung der über diesem angeordneten Sortiergeräte S1 und S2.

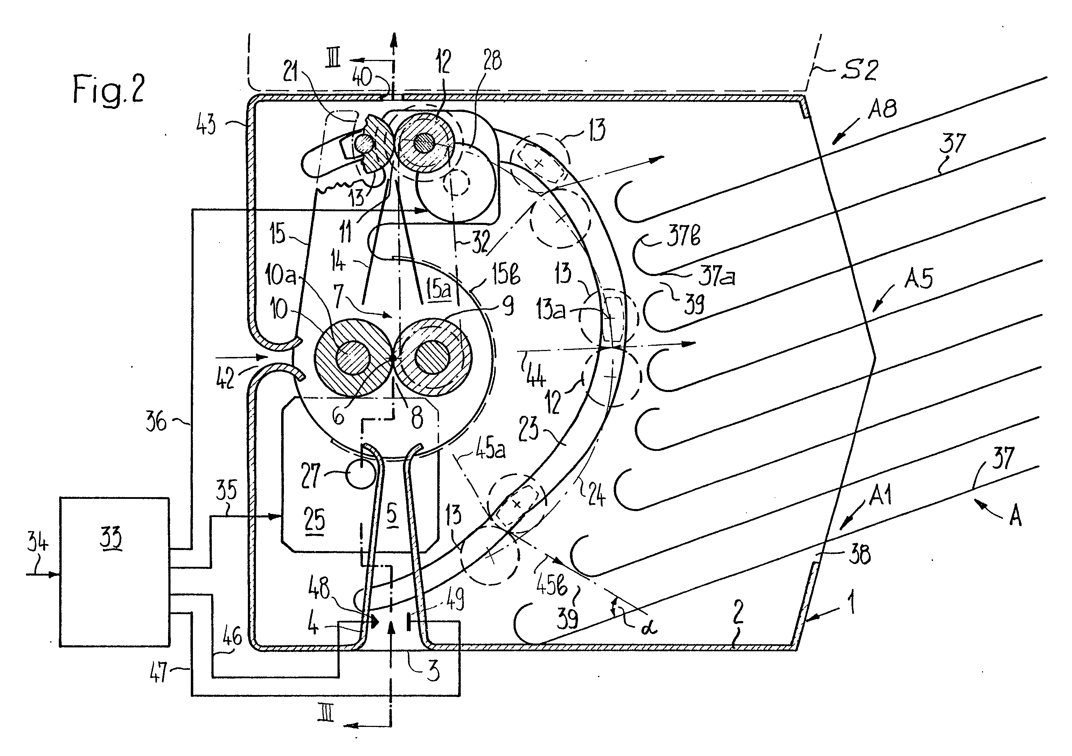

Wie sich aus Fig. 2 ergibt, weist das Sortiergerät S1, das unmittelbar auf den Drucker D aufgesetzt ist, ein Gehäuse 1 auf, dessen Boden 2 einen eine Uebernahmestelle bildenden Eintrittsspalt 3 aufweist. Dabei bilden an den Eintrittsspalt 3 anschliessende, in das Gehäuse 1 hineinragende Wandelemente 4 eine vertikale Blattführung 5.

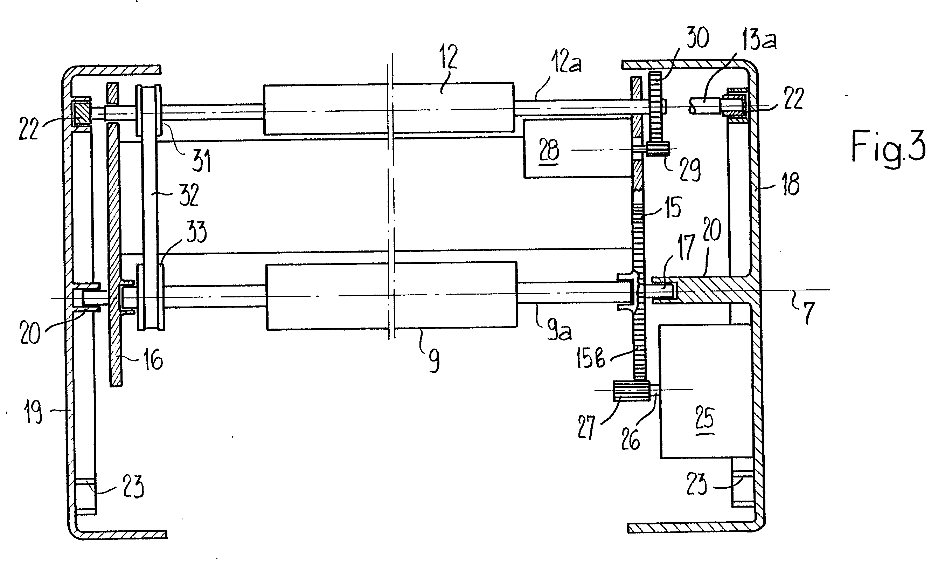

Die vertikale Mittelebene der Blattführung 5 enthält oberhalb derselben angeordnet eine in Fig. 2 als Punkt dargestellte, parallel zum Boden 2 verlaufende Leitachse 6, um welche ein allgemein mit 7 bezeichneter, einen Förderspalt bildender Förderkanal verschwenkbar ist. Wie auch aus Fig. 3 weiter ersichtlich ist, umfasst der Förderkanal ein Paar von an dessen Eintrittsseite 8 angeordneten umlaufenden Organen in Form von Walzen 9 und 10, ein weiteres Walzenpaar, das durch auf dessen Austrittsseite 11 angeordnete Walzen 12 und 13 gebildet ist sowie ein Paar von zwischen den Walzenpaaren 9, 10, bzw. 12, 13 sich erstreckenden Leitelementen 14. Die Walzen 9-12, die Achszapfen 9a - 12a aufweisen, greifen über diese in zwei einander gegenüberliegende Schildplatten 15 und 16 ein und bilden mit den letzteren eine Einheit. Die Schildplatten 15 und 16 sind durch nicht dargestellte Abstandselemente, z.B. Stangen, starr miteinander verbunden und weisen je einen nach aussen ragenden Achszapfen 17 auf. In zwei gegenüberliegenden Stirnwandteilen 18 und 19 sind Lageraugen 20 vorgesehen, welche - die Lage der Leitachse 6 definierend - die Achszapfen 17 aufnehmen. Mithin ist die den Förderkanal 7 umfassende Einheit um die Leitachse 6 schwenkbar. Als Teil des Förderkanales bilden die Walzen 9, 10 einen Förderspalt.

Während die Walzen 9, 10 und 12 über deren Achszapfen 9a, 10a und 12a unmittelbar in den Schildplatten 15 und 16 drehbar gelagert sind, ist die Walze 13 um die Walze 12 schwenkbar beweglich und steht mit einer Lenkanordnung im Eingriff.

Im dargestellten Ausführungsbeispiel durchsetzen im Sinne dieser Lenkanordnung die Achszapfen 13a der Walze 13 in beiden Schildplatten 15 und 16 je einen kreisbogenförmigen Führungsschlitz 21 und erstrecken sich beidseitig in je einen Gleitstein 22, in welchem sie drehbar gelagert sind. Während die Kreisbogen der Führungsschlitze 21 ihre Mittelpunkte in der Achse der Walze 12 haben, sind die Gleitsteine 22 in je einer eine Kulisse bildenden Nut 23 verschiebbar. Die Nuten 23, die in den Seitenwandteilen 18 und 19 identisch ausgebildet sind, verlaufen gekrümmt und umfassen die Leitachse 6 um etwas mehr als 180°. Bezogen auf eine kreisbogenförmige Bahn 24 (Fig. 2), welche die Walze 12 bei der Verschwenkung des Förderkanals 7 bzw. der Schildplatten 15, 16 um die Leitachse 6 durchführt, weisen die Nuten 23 Abschnitte sowohl mit kleinerem als auch mit grösserem Krümmungsradius auf. Hierauf wird weiter unten noch näher eingegangen.

Die Schildplatte 15 weist der Leitachse 6 benachbart einen kreisbogenförmigen Teil 15a auf, der eine Verzahnung 15b trägt. Ein am Seitenwandteil 18 befestigter Schrittmotor 25 trägt auf seiner Welle 26 ein Ritzel 27, das mit der Verzahnung 15b kämmt. An der Schildplatte 15 ist ein Elektromotor 28 befestigt, der über ein Ritzel 29 sowie ein mit einem der Achszapfen 12a drehstarr verbundenes Zahnrad 30 die Walze 12 antreibt. Eine auf dem anderen der beiden Achszapfen 12a drehstarr aufgesetzte Riemenscheibe 31 steht über einen Antriebsriemen 32 mit einer Riemenscheibe 33 in Verbindung, die auf einem der Achszapfen 9a drehstarr angeordnet ist. Mithin steht der Elektromotor 28 sowohl mit der Walze 12 wie auch mit der Walze 9 in Antriebsverbindung und treibt beide mit gleicher Umfangsgeschwindigkeit an.

Bei 33 ist schematisch eine Steuerung angedeutet, deren Eingang 34 mit dem Drucker D oder unmittelbar mit einem nicht dargestellten Rechner in Verbindung steht. Ueber Leitungen 35 und 36 ist die Steuerung 33 mit dem Schrittmotor 25 bzw. mit dem Elektromotor 28 verbunden. Die Steuerung 33 ist im weiteren über Leitungen 46 und 47 mit einem Sender 48 bzw. Empfänger 49 einer Fotozelle verbunden, die in der Nachbarschaft des Bodens 2 in der Blattführung 5 angeordnet ist.

Wenn, wie dargestellt auf dem Sortiergerät S1, ein weiteres Sortiergerät S2 aufgesetzt ist, steht die Steuerung 33 auch mit diesem Sortiergerät in elektrischer Verbindung und beherrscht dieses (nicht dargestellt).

Wie aus Fig. 2 ersichtlich ist, sind die Ablagefächer A durch Platten 37 gebildet, die im Gehäuse 1 in nicht dargestellter Weise befestigt sind und sich durch eine Oeffnung 38 aus diesem heraus erstrecken. Jede Platte 37 weist an ihrem inneren Ende 37a einen im Querschnitt halbkreisförmigen Ansatz 37b auf, wobei die Ansätze benachbarter Platten 37 zwischen sich einen Zwischenraum 39 freilassen. Die Enden 37a der Platten 37 sind den Nuten 23 benachbart.

Jede der Platten 37 bildet mit ihrem Ansatz 37b eine Abgabestelle. Eine weitere Abgabestelle ist durch einen Schlitz 40 in der Oberseite 41 des Gehäuses 1 gebildet. Das Sortiergerät S1 besitzt neben der durch den Eintrittsspalt 3 gebildeten Uebernahmestelle eine weitere Uebernahmestelle, die durch einen auf der Höhe der Leitachse 6 angeordneten Eintrittsspalt 42 in einer Seitenwand 43 des Gehäuses 1 gebildet ist. In der dargestellten Anordnung des Sortiergerätes 1 über der Büromaschine, d.h. dem Drucker D, bleibt der Eintrittsspalt 42 unbenutzt.

Im Betrieb des Sortiergerätes S1 erfolgt die Zufuhr von durch den Drucker D bedruckten Blättern durch den Eintrittsspalt 3, wobei die Blattführung 5 deren Ausrichtung auf die Leitachse 6 gewährleistet. Bei Ankunft eines zu sortierenden Blattes in der Blattführung 5 befindet sich der Förderkanal 7 in der in Fig. 2 dargestellten Lage. Die Fotozelle 48, 49 meldet die Ankunft eines Blattes in der Blattführung 5 als entsprechendes Signal der Steuerung 33, die den Elektromotor 28 zum Antrieb der Walzen 9, 10 und 12, 13 in Gang setzt. Nach einer vorbestimmten Zeitspanne, die das Blatt benötigt, um den Weg zwischen Fotozelle 48, 49 und dem Förderspalt zurückzulegen, leitet die Steuerung den Sortiervorgang ein. Das noch durch den Drucker D vorgeschobene Blatt kann mithin in den Förderkanal 7, bzw. zwischen den Förderspalt zwischen den Walzen 9, 10 einlaufen. Während die Walzen 9, 10 das Blatt vom Drucker mit gleicher Geschwindigkeit durch den Förderkanal 7 vorschieben, wird dieser durch den Schrittmotor 25 verschwenkt. Die Verschwenkung erfolgt entsprechend einem von der Steuerung 33 verarbeiteten Sortiersignal des Druckers, indem diese dem Schrittmotor eine einer vorbestimmten Abgabestelle entsprechende Anzahl von Impulsen liefert. Angenommen die Steuerung 33 habe dem vom Drucker erhaltenen Sortiersignal für das abgegebene Blatt die Abgabestelle zugeordnet, die dem Ablagefach A5 entspricht, so wird der Förderkanal 7 in die Schwenklage verschwenkt, die durch die strichpunktierte Pfeillinie 44 angedeutet ist. Dabei ist die zugeordnete Lage der Walzen 12, 13 gestrichelt eingezeichnet.

Wie erläutert, ist die Umfangslage der Walze 13 relativ zur Walze 12 durch den Verlauf bzw. die jeweilige Lage der Nut 23 relativ zur Bahn 24 bezogen auf eine bestimmte Schwenklage des Förderkanals 7 bestimmt. Im Fall der durch die Pfeillinie 44 angedeuteten Schwenklage ist der Krümmungsradius der Nut 23 annähernd gleich dem Radius der Bahn 24 und es verläuft die Achse 13b der Walze 13 praktisch durch die Bahn 24. Die Walzen 12 und 13 können demnach das Blatt ohne Ablenkung in der Richtung der Pfeillinie 44 in das Ablagefach A5 überführen.

Die Winkelgeschwindigkeit, mit welcher der Schrittmotor 25 den Förderkanal 7 um die Leitachse 6 verschwenkt, ist so gewählt, dass dieser auch den grössten benötigten Schwenkwinkel, dh. jenen, um das Ablagefach A1 zu erreichen, zurückgelegt hat, wenn der Blattanfang das Ende des Förderkanals erreicht hat. Dabei wird wie erwähnt davon ausgegangen, dass die Fördergeschwindigkeit im Förderkanal normalerweise jener der Büromaschine, d.h. im vorliegenden Fall jener des Druckes gleich ist. Wenn das Blattende die Fotozelle 48, 49 passiert, erzeugt diese ein weiteres Signal. Die Steuerung 33 schaltet aufgrund dieses Signales den Elektromotor 28 auf eine höhere Drehzahl um, durch welche das Blatt mit höherer Fördergeschwindigkeit aus dem Förderkanal heraus und in das angewählte Ablagefach A5 hineingefördert wird. Das Blatt gelangt mit seiner restlichen Bewegungsenergie vollständig in das Ablagefach A5 und legt sich mit seinem hinteren Ende hinter dem Ansatz 37b ab.

In einem vorbestimmten zeitlichen Abstand seit dem letzten Signal der Fotozelle 48, 49 - ausreichend, um das Blatt vollständig aus dem Förderkanal 7 austreten zu lassen - veranlasst die Steuerung 33, dass einerseits der Elektromotor 28 stillgesetzt wird und andererseits der Schrittmotor 25 angesteuert wird, um den Förderkanal in Richtung der in Fig. 2 dargestellten Ausgangslage zurückzubewegen.

Der beschriebene Vorgang wiederholt sich, sobald die Fotozelle 48, 49 die Ankunft eines weiteren Blattes meldet. Soll ein Blatt z.B. in das Ablagefach A1 verbracht werden, so wird der Förderkanal in die durch die Pfeillinie 45a angedeutete Richtung verschwenkt. Dabei verschwenkt sich auch die Walze 13 relativ zur Walze 12 so, dass das Blatt beim Austritt aus dem Förderkanal 7 eine Umlenkung entsprechend der Pfeilrichtung 45b erfährt. Die Richtung der Umlenkung ist so gewählt, dass das Blatt gegenüber dem Ablagefach, d.h. dessen Platte 37, einen möglichst kleinen Winkel $\alpha$ einschliesst und trotzdem den Zwischenraum 39 erreicht.

Sinngemäss erfolgt eine entgegengesetzte Verschwenkung der Walze 13 relativ zur Walze 12, um ein Blatt in das Ablagefach A8 abzulegen. Dabei ist eine Umlenkung des Blattes in eine zum Ablagefach praktisch parallele Richtung möglich.

Der mit 23a bezeichnete Teil der Nut wird im dargestellten Ausführungsbeispiel nicht benötigt, jedoch gestattet dieser in einer anderen Anordnung des Sortiergerätes S1, Blätter ebenfalls vertikal abwärts abzugeben.

Sofern erwünscht, kann eine weitere Fotozelle dem Förderkanal 7 selbst zugeordnet und in der Nachbarschaft seiner Austrittsseite bzw. am Austritt aus den Walzen 12, 13 angeordnet sein. Die weitere Fotozelle könnte damit einen Teil der Zeitschaltung ersetzen und der Steuerung 33 ein Signal dann liefern, wenn das Ende des Blattes passiert, um den Elektromotor 28 stillzusetzen und insbesondere den Förderkanal 7 in die Ausgangslage zurückzuschwenken.

Es ist möglich, den Beginn von Schwenkbewegungen des Förderkanales nicht über Fühler oder Fotozellen, sondern über die Zeit zu steuern.

Im dargestellten Ausführungsbeispiel wird davon ausgegangen, dass der Elektromotor 28 sofort in Betrieb gesetzt wird, sobald die Fotozelle 48, 49 die Ankunft eines neuen Blattes in der Blattführung 5 meldet, so dass die Walzen 9, 10, 12, 13 in Vorwärtsdrehrichtung angetrieben werden. Die Walzen befinden sich jedenfalls schon in Drehung, wenn das Blatt an der Eintrittseite 8 des Förderkanales ankommt. Es wäre aber zum Zwecke der Ausrichtung des Blattes bzw. Vermeidung einer schiefen Einführung in den Förderkanal 7 auch möglich, die Walze erst mit einer Zeitverzögerung anzutreiben und zwar so, dass das Blatt mit seiner Vorderkante im Spalt auf die noch im Stillstand befindlichen Walzen 9, 10 auftrifft. Die Blattvorderkante richtet sich dann in bekannter Weise parallel zu den Walzen 9, 10 aus, während sich im Blatt eine Aufbauchung einstellt. Nach Ablauf der Verzögerungszeit setzt der Elektromotor 28 die Walzen dann in Vorwärtsdrehrichtung in Bewegung, so dass die Walzen 8, 9 das Blatt in ausgerichteter Lage in den Förderkanal 7 einziehen.

Zur Erreichung des gleichen Zieles ist es auch möglich, das entsprechende Signal der Fotozelle 48, 49 durch die Steuerung 33 zum Antrieb des Elektromotors 28 in umgekehrter Drehrichtung zu verwenden. Kommt das Blatt dann mit seiner Vorderkante an den Walzen 9, 10 an, so befinden sich diese schon in Rückwärtsdrehrichtung in Bewegung. Da das Blatt in den Förderkanal 7 nicht eintreten kann, baucht es sich auf und die Vorderkante desselben richtet sich parallel zu den Walzen 9, 10 aus. Nach einer entsprechenden Zeitverzögerung schaltet die Steuerung 33 den Elektromotor 28 in Bezug auf seine Drehrichtung um und durch die sich nunmehr in Vorwärtsdrehrichtung bewegenden Walzen wird das Blatt in ausgerichteter Lage eingezogen.

Es wurde schon dargelegt, dass das Blatt mit einer höheren Geschwindigkeit aus dem Förderkanal herausgefördert werden kann, als dieses in den Förderkanal eingezogen wird. Diese Massnahme gestattet auch, die für den Sortiervorgang benötigte Zeit zu verkürzen. Dies ist dann besonders bedeutsam, wenn Abgabestellen vorhanden sind, welche die Verschwenkung des Förderkanales um grössere Winkel notwendig machen.

Nachzutragen ist, dass die Abnützung der vom Elektromotor 28 angetriebenen Organe dadurch vermindert wird, dass dieser nur während der Förderung eines Blattes eingeschaltet ist. Hierdurch lässt sich auch der Stromverbrauch des Gerätes klein halten. Anstelle einer Betriebsweise, bei welcher das oder die Sortiergeräte vom die Blätter liefernden Drucker für jedes Blatt ein Sortiersignal erhält, ist auch eine Ausgestaltung der Steuerung 33 möglich, bei welcher z.B. entsprechend einer vom Drucker zu erzeugenden Anzahl von Kopien eine entsprechende Anzahl Abgabestellen nacheinander in einer vorbestimmten Folge angefahren werden.

## Ansprüche

1. Sortiergerät für von einer Büromaschine gelieferte, blattförmige Aufzeichnungsträger mit einem beweglich angeordneten, einen Förderspalt (7) bildenden Paar von angetriebenen, umlaufenden Organen (9, 10) sowie Steuermitteln (33), um den Förderspalt von einer Uebernahmestelle (3) jeweils auf eine von mehreren Abgabestellen auszurichten, dadurch gekennzeichnet, dass der Förderspalt um eine Leitachse (6) schwenkbar gelagert ist.

2. Sortiergerät nach Anspruch 1, dadurch gekennzeichnet, dass der Förderspalt zumindest Teil eines Förderkanals (7) bildet.

3. Sortiergerät nach Anspruch 2, dadurch gekennzeichnet, dass zumindest ein Teil des Förderkanals (7) gerade ist und die Leitachse (6) in der von diesem Teil definierten Ebene liegt.

4. Sortiergerät nach Anspruch 2 oder 3, dadurch gekennzeichnet, dass den als Walzen (9, 10) ausgebildeten umlaufenden Organen auf der Einzugsseite des Förderkanales (7) ein weiteres Walzenpaar (12, 13) auf der Austrittsseite desselben nachfolgt, das gemeinsam mit diesem angetrieben ist, wobei die Leitachse (6) in Einzugsrichtung in der Nachbarschaft der beiden Walzen auf der Einzugsseite liegt.

5. Sortiergerät nach Anspruch 4, dadurch gekennzeichnet, dass der Förderkanal (7) zwischen den Walzenpaaren (9, 10; 12, 13) angeordnete Führungsorgane (14) umfasst.

6. Sortiergerät nach Anspruch 4 oder 5, dadurch gekennzeichnet, dass der Förderspalt des Walzenpaares auf der Austrittsseite relativ zu demjenigen des Walzenpaares auf der Eintrittsseite richtungsverstellbar ist und dass eine Lenkanordnung (23) vorgesehen ist, die in Abhängigkeit von der Schwenklage des geraden Teiles des Förderkanales (7) die Verstellung bewirkt.

7. Sortiergerät nach Anspruch 3, 4 oder 5, dadurch gekennzeichnet, dass die Walzenpaare (9, 10; 12, 13) zwischen zwei miteinander starr verbundenen, um die Leitachse (7) schwenkbar gelagerten Schildplatten (15, 16) gehalten sind, die mit einem Antriebsmotor (25), z.B. einem Schrittmotor, in Verbindung stehen.

8. Sortiergerät nach Anspruch 6, dadurch gekennzeichnet, dass eine der Walzen auf der Austrittsseite um die andere derselben schwenkbar ist und mit einer Lenkanordnung (23) im Eingriff steht.

9. Sortiergerät nach Anspruch 7, dadurch gekennzeichnet, dass die Lenkanordnung (23) zwei beidseitig ausserhalb der Schildplatten (15, 16) angeordnete Kulissen (23) umfasst, wobei Achszapfen (13a) der Walze (13) kreisbogenförmige Führungen (21) in beiden Schildplatten durchsetzend mit den Kulissen in Eingriff stehen.

10. Sortiergerät nach Anspruch 8, dadurch gekennzeichnet, dass die Kulissen als Nuten (23) ausgebildet sind, in welche Drehlager der Achszapfen (13a) bildende Gleitsteine (22) eingreifen.

11. Verwendung der Sortiergerätes nach einem der vorangehenden Ansprüche zur Ueberführung von Aufzeichnungsträgern an ein weiteres Sortiergerät.

12. Verfahren zum Sortieren von blattförmigen Aufzeichnungsträgern, die von einer Büromaschine einzelblattweise ausgeliefert werden, wobei einen Förderspalt bildende Organe jeden ausgelieferten Aufzeichnungsträger mit einer Förderbewegung übernehmen und einer wählbaren Abgabestelle zuführen, dadurch gekennzeichnet, dass für jeden zur Auslieferung kommenden Aufzeichnungsträger der Förderspalt in einer Uebernahmerichtung positioniert wird, dass nach der Erfassung des Aufzeichnungsträgers im Förderspalt dieser in Richtung auf die gewählte Abgabestelle verschwenkt wird und dass während der Verschwenkung des Förderspaltes der Aufzeichnungsträger in diesen weitergefördert wird.

13. Verfahren nach Anspruch 12, dadurch gekennzeichnet, dass die Förderbewegung nach Entlassen des Aufzeichnungsträgers aus dem Förderspalt unterbrochen und dieser in die Uebernahmerichtung zurückgebracht wird.

14. Verfahren nach Anspruch 13, dadurch gekennzeichnet, dass die Förderbewegung während der Weiterförderung des Aufzeichnungsträgers beschleunigt wird.

15. Verfahren nach Anspruch 13 oder 14, dadurch gekennzeichnet, dass die Auslieferung des Aufzeichnungsträgers überwacht und die Förderbewegung in Funktion der Feststellung eines neuen Aufzeichnungsträgers in Gang gesetzt wird.

# Fig. 1

Fig.2